# FASCICULE DE BREVET EUROPEEN

(11) **EP 1 685 139 B1**
(45) Date de publication et mention de la délivrance du brevet: **16.09.2009**
(21) Numéro de dépôt: 04805385.4
(22) Date de dépôt: 04.11.2004
(51) Int. Cl.: C07F 7/28

(54) **OXYDES MIXTES TI/SI MODIFIES PAR DES GROUPEMENTS ORGANOSILICIES**
DURCH ORGANOSILICIUMRESTE MODIFIZIERTE GEMISCHTE TI/SI-OXIDE
MIXED TI/SI OXIDES MODIFIED BY ORGANOSILICON RADICALS

(30) Priorité: 14.11.2003 FR 0313343
(43) Date de publication de la demande: 02.08.2006
(73) Titulaire: CENTRE NATIONAL DE LA RECHERCHE SCIENTIFIQUE, 75016 Paris Cédex (FR)
(72) Inventeur: MUTIN, Hubert, F-34830 Clapiers (FR); LAFOND, Vincent, F-13250 Saint-Chamas (FR); VIOUX, André, F-34980 Montferrier (FR)
(74) Mandataire: Blot, Philippe Robert Emile
(86) Numéro de dépôt international: PCT/FR2004/002835
(87) Numéro de publication internationale: WO 2005/049626

(56) Documents cités:
- DENG Y ET AL: "Hydrophobic Ti-Si Xerogels: Catalysts for the Selective Epoxidation of Olefins and Allylic Alcohols" 1 avril 2001 (2001-04-01), JOURNAL OF CATALYSIS, ACADEMIC PRESS, DULUTH, MN, US, PAGE(S) 115-122 , XP004432598 ISSN: 0021-9517 cité dans la demande abrégé; tableau 1
- KOCHKAR H ET AL: "Synthesis of Hydrophobic TiO2-SiO2Mixed Oxides for the Epoxidation of Cyclohexene" JOURNAL OF CATALYSIS, ACADEMIC PRESS, DULUTH, MN, US, vol. 171, no. 2, 15 octobre 1997 (1997-10-15), pages 420-430, XP004465525 ISSN: 0021-9517 cité dans la demande
- MULLER C A ET AL: "Organically Modified Titania-Silica Aerogels for the Epoxidation of Olefins and Allylic Alcohols" JOURNAL OF CATALYSIS, ACADEMIC PRESS, DULUTH, MN, US, vol. 184, no. 1, 15 mai 1999 (1999-05-15), pages 280-293, XP004443287 ISSN: 0021-9517 cité dans la demande

## Description

La présente invention porte sur des oxydes mixtes Ti/Si modifiés par des groupements organosiliciés, un procédé pour leur préparation, ainsi que sur leur utilisation comme catalyseur.

Il est connu d'utiliser des oxydes mixtes SiO₂/TiO₂ en catalyse hé térogène, notamment pour l'époxydation d'alcènes. Il est également connu de préparer des oxydes mixtes modifiés par des groupements organiques pour améliorer leur activité et leur sélectivité.

Les oxydes mixtes sont généralement préparés par hydrolyse d'alcoxydes. Par exemple, US-5,935,895 décrit la préparation d'un aérogel "oxyde mixte Si,Ti" par un procédé comprenant une étape d'hydrolyse d'un alcoxyde de silicium et d'un complexe alcoxyde de titane-chélate dispersé dans un alcool à pH acide, une étape de condensation des hydroxydes de Si et de Ti formés pour obtenir un sol, une étape de mûrissement du sol par agitation sous atmosphère inerte, et une étape de séchage du sol mûri et gélifié par lavage au CO₂ liquide pour éliminer l'alcool et l'eau, puis élimination de CO₂ dans des conditions supercritiques pour obtenir un solide mésoporeux.

Yi Deng, et al., [Journal of Catalysis 199, 115-122 (2001)] décrit la préparation d'oxydes mixtes Ti-Si portant des groupes méthyle, par un procédé consistant à mélanger du méthyltriéthoxysilane, du tétraéthoxysilane et du propoxyde de titane sous agitation pendant 15 min, à diluer ensuite à l'éthanol, puis à acidifier le milieu par addition de HCl. Ensuite, suivant la manière d'effectuer la gélification et le séchage, on obtient un oxyde mixte microporeux ou un oxyde mixte mésoporeux. Le temps nécessaire pour la synthèse de l'oxyde mésoporeux est d'environ 4 mois.

C. A. Muller et al., ["Topics in Catalysis 11/12 (2000) 369-378" ou "Journal of Catalysis 184(1999) 280-293] décrit la préparation d'un oxyde mixte Ti-Si modifié par des groupes organiques (méthyle ou phényle), par un procédé comprenant les étapes du procédé de US-5,935,895 et une étape supplémentaire de préhydrolyse du précurseur méthyl- ou phényltriéthoxysilane, ainsi que l'utilisation de l'oxyde mixte comme catalyseur pour l'époxydation d'oléfines.

H. Kochkar et al. [Journal of Catalysis 171(1997) 420-430] décrit la préparation d'oxyde mixte Ti-Si modifié par des groupes organiques (méthyle ou phényle), par un procédé analogue à celui de US-5,935,895, mais en utilisant un précurseur alcoxyde de titane non chélaté. L'utilisation de l'oxyde mixte modifié comme catalyseur pour l'époxydation d'oléfines est également décrite.

Il apparaît ainsi que les procédés de préparation d'oxydes mixtes modifiés par des groupes organiques comprennent de multiples étapes qui sont coûteuses (en particulier l'étape de séchage) et utilisent des précurseurs du type alcoxyde qui ne sont pas toujours disponibles dans le commerce ou qui sont difficiles à préparer.

Il a également été envisagé de préparer des oxydes mixtes SiO₂/TiO₂ par des procédés non hydrolytiques.

Par exemple, V. Lafond, et al, [Journal of Molecular Catalysis A : Chemical 182-183 (2002) 81-88] décrit la préparation d'oxydes par condensation non hydrolytique de chlorures avec des alcoxydes ou des éthers, illustrée par l'exemple suivant :

SiCl₄ (40,4 mmol) + Si(OⁱPr)₄ (33,1 mmol) + Ti(OⁱPr)₄ (7,39 mmol) → SiO₂-TiO₂

Les oxydes mixtes ainsi obtenus ne portent cependant pas de groupes organiques.

En outre, L. Crouzet, et al., [Chem. Mater. 2003, 1530-134] décrit les réactions suivantes, effectuées à 100°C :

MeSiCl₃ + % Ti(OⁱPr)₄ → MeSiO_{1,5}, ¾ TiO₂ + 3ⁱPrCl

MeSi(OⁱPr)₃ + ¾ TiCl₄ → MeSiO_{1,5}, ¾ TiO₂ + 3ⁱPrCl

Les réactifs utilisés ne comprennent pas de précurseurs de SiO₂. L'analyse par spectroscopie IR sur les produits obtenus montre l'absence de la vibration de Si-O-Ti. L'analyse élémentaire par microsonde (EDX) montre l'existence de domaines riches en Si et de domaines riches en Ti, lesdits domaines étant d'une taille supérieure au micron, signifiant que les solides obtenus sont hétérogènes.

Le but de la présente invention est de fournir des oxydes mixtes Si-Ti modifiés par des groupes organosiliciés, par un procédé non hydrolytique.

Le composé selon la présente invention est un oxyde mixte de Ti et de Si à structure mésoporeuse et portant des groupes organiques, qui peut être représenté par la formule (TiO₂) (SiO₂)ₓ(RᵤSiO_{2-(u/2)})_{y} dans laquelle 2<x<100, 0<u<4, x+y>3, 0,1<y<100, et R est un groupe organique choisi parmi les groupes alkyle et les groupes aryle, ou bien R est un groupe divalent arylène ou alkylène reliant deux atomes de Si. Il est **caractérisé en ce que :**
- il porte à sa surface des atomes d'halogène X et des groupes alcoxyde OR' fixés respectivement par une liaison M-X et M-OR', M représentant Si ou Ti, et R' représentant un groupe organique choisi parmi les alkyles et les aryles ;
- il a un volume poreux Vₚ entre 0,2 et 3 cm³/g, et une surface spécifique S_{BET} entre 100 et 1500 m²/g ;
- il est homogène à l'échelle micronique et contient des liaisons Si-O-Ti.

L'homogénéité à l'échelle micronique signifie que l'oxyde mixte ne comprend pas de domaines de taille supérieure au micron qui sont les uns très riches en Ti et pauvres en Si, les autres très riches en Si et pauvres en Ti (ce qui traduirait une séparation de phase). Cette caractéristique est déterminée par analyse par microsonde (EDX). La preuve qualitative de l'existence de liaisons Si-O-Ti est fournie par exemple par la présence d'une bande de vibration à environ 950 cm⁻¹ dans le spectre IR.

Le caractère homogène des oxydes mixtes de l'invention est favorisé par le choix d'un rapport Si/Ti = x+y/1 élevé. On préfère tout particulièrement les oxydes mixtes dans lesquels x+y > 8.

X est un halogène choisi parmi Cl, Br, I et F. Le chlore est particulièrement préféré.

R représente de préférence un alkyle ou un alkylène linéaire ou ramifié, les groupes alkyle ayant de 1 à 18 atomes de carbone étant particulièrement préférés.

R peut en outre être un radical aromatique monocyclique ou polycyclique, condensé ou non. Le groupe phényle est particulièrement préféré.

Les substituants R du type alkyle ou du type aryle peuvent porter des groupes fonctionnels, choisis par exemple parmi les halogénures, les esters et les amines.

R' est de préférence un alkyle linéaire ou ramifié, ayant de préférence de 1 à 4 atomes de carbone. R' peut en outre être un radical aryle, par exemple un groupe phényle.

Les groupes R' portés par l'oxyde mixte de la présente invention peuvent être identiques ou différents.

De même, (RᵤSiO_{2-(u/2)})_{y} peut représenter un seul type d'unités, ou plusieurs types d'unités Rⁱ_{uⁱ}SiO_{2-(uⁱ/2)})_{yⁱ} dans lesquelles :
- les différents Rⁱ représentent indépendamment les uns des autres un groupe alkyle ou un groupe aryle, ou un groupe divalent arylène ou alkylène reliant deux atomes de Si ;
- les uⁱ, identiques ou différents, sont tels que 0<uⁱ<4 ;
- les yⁱ, identiques ou différents, sont tels que la somme des yⁱ satisfait aux conditions énoncées pour y dans le présent texte.

Le procédé de préparation des oxydes mixtes de la présente invention consiste à faire réagir au moins un halogénure choisi parmi TiX₄, SiX₄ et RₜSiX₄₋ₜ avec au moins un agent donneur d'oxygène choisi parmi les dialkyléthers R'-OR', les tétraalcoxydes de titane Ti(R'O)₄, les tétraalcoxydes de silicium Si(R'O)₄, les organoalcoxysilanes RₛSi(OR')₄₋ₛ et les alcools R'OH selon le schéma réactionnel global suivant :

aTiX₄ +cSiX₄ + fRₜSi₄₋ₜ + bTi(R'O)₄ + dSi(R'O)₄ + eRₛSi(OR')₄₋ₛ + g(R'OH ou R'-OR')

dans lequel a, b, c, d, e, f et g représentent le nombre de moles des réactifs respectifs, avec les conditions suivantes : a+b>0, c+d>0, e+f>0, 0<t<4, 0<s<4.

La durée de la réaction est de quelques heures à quelques jours, suivant les conditions de mise en oeuvre. Une durée de 1 à 6 jours est généralement convenable.

Lorsque l'agent donneur d'oxygène est autre qu'un éther ou un alcool, le nombre n_{X} d'atomes d'halogène et le nombre n_{R}, de groupes R' apportés par les précurseurs sont de préférence tels que 0,9 ≤ nₓ/n_{R'} ≤ 1,1, c'est-à-dire 0,9 ≤ 4a +4c + f(4-t) / 4b + 4d + e(4-s) + 2g ≤ 1,1.

Lorsque le seul agent donneur est un éther R'OR', le nombre n_{X} d'atomes d'halogène et le nombre n_{R'} de groupes R' apportés par l'éther sont de préférence tels que 0,9 ≤ nₓ/n_{R'}, c'est-à-dire 0,9 ≤ 4a +4c + f(4-t) / 2g.

Lorsque l'alcool R'OH est le seul agent donneur d'oxygène, le nombre n_{X} d'atomes d'halogène et le nombre n_{R'} de groupes R' apportés par l'alcool sont de préférence tels que 1,8 ≤ nₓ/n_{R'}, c'est-à-dire 1,8 ≤ 4a +4c + f(4-t) / 2g.

Dans le schéma réactionnel global ci-dessus, l'halogénure d'organosilane RₜSiX₄₋ₜ peut être un composé unique ou un mélange d'halogénures d'organosilane Rⁱ_{tⁱ}SiX_{4-tⁱ} dans lesquels les Rⁱ sont choisis indépendamment les uns des autres parmi les radicaux définis ci-dessus pour R, et les tⁱ identiques ou différents sont tels que 0<tⁱ<4. De même, l'organoalcoxysilane RₛSi(OR')₄₋ₛ peut être un composé unique ou un mélange de composés R^{j}ₛjSi (OR') ₄₋ₛj dans lesquels les R^{j} sont choisis indépendamment les uns des autres parmi les radicaux définis ci-dessus pour R, et les s^{j} identiques ou différents sont tels que 0<s^{j}<4.

Lorsqu'on utilise des mélanges d'halogénures d'organosilane et/ou des mélanges d'organoalcoxysilanes, les proportions sont choisies de telle sorte que la somme des divers fⁱ(4-tⁱ) et la somme des divers e^{j}(4-s^{j}) satisfont aux conditions énoncées pour f(4-t) et pour e(4-s).

Lorsque l'agent donneur d'oxygène est autre qu'un alcool, la réaction est effectuée à une température supérieure à 80°C, de préférence entre 90°C et 200°C. Lorsqu'un alcool est utilisé comme donneur d'oxygène, la réaction peut être effectuée à une température plus faible.

La réaction peut être effectuée dans tout solvant dans lequel les composés formés sont solubles, par exemple le dichlorométhane. Lorsque certains précurseurs utilisés sont liquides, ils peuvent servir de solvant, éventuellement à chaud, pour les autres précurseurs et pour les produits intermédiaires obtenus. Ainsi, les alcools ou les éthers utilisables comme agent donneur d'oxygène sont des liquides et peuvent être utilisés comme solvant. En outre, les chlorures et certains alcoxydes utilisables dans le procédé de l'invention sont des liquides dans lesquels les composés obtenus sont solubles à chaud. Par exemple, Si(OⁱPr)₄ et Ti(OⁱPr)₄ sont liquides, alors que Ti(OEt)₄ est solide.

Dans un mode de réalisation particulier, on ajoute un acide de Lewis comme catalyseur, par exemple FeCl₃ ou ZrCl₄. Dans ce cas, la réaction est plus rapide et peut être effectuée à une température inférieure.

L'oxyde mixte obtenu peut être séparé du milieu réactionnel par filtration, lavage et séchage.

Les oxydes mixtes de la présente invention peuvent être utilisés avantageusement comme catalyseur pour l'époxydation des oléfines. Des essais effectués pour l'époxydation du cyclohexène par l'hydroperoxyde de cumyle ont montré que les catalyseurs sont sélectifs et actifs. Le fait que les oxydes mixtes de l'invention soient particulièrement actifs comme catalyseur confirme leur homogénéité. En effet, TiO₂ est un mauvais catalyseur. On considère que les sites actifs sont des atomes de Ti liés à des atomes de Si par des Si-O-Ti.

La présente invention est illustrée plus en détail par les exemples suivants, auxquels elle n'est cependant pas limitée.

### Exemple 1

Cet exemple a été réalisé avec :
- le diisopropyléther ⁱPr₂O comme agent donneur d'oxygène
- TiCl₄ comme précurseur de Ti
- SiCl₄ comme précurseur de Si
- MeSiCl₃ et Me₃SiCl comme précurseurs du groupe organique et de Si.

Les réactifs ont été mélangés de la manière suivante : on a introduit les précurseurs dans un réacteur contenant du dichlorométhane sous atmosphère inerte, puis on a laissé le mélange à 110°C pendant 4 jours dans le réacteur fermé. Ensuite, on a séparé le solide formé par filtration, et on l'a lavé 3 fois avec du dichlorométhane. Enfin, le solide a été séché sous vide à 120°C durant 12 h.

Plusieurs échantillons ont été préparés avec différentes proportions de précurseurs, qui sont indiquées dans le tableau 1 suivant. Pour chaque échantillon, la 1^{ère} ligne donne les quantités en g, la 2^{ème} ligne donne les quantités en mmol.

**Tableau 1**

| Echant. | ⁱPr₂O | TiCl₄ | SiCl₄ | MeSiCl₃ | Me₃SiCl | CH₂Cl₂ | Composition |
|---|---|---|---|---|---|---|---|
| VL452 | 13 , 4 | 1,4 | 4,7 | 6,2 | 0 | 18 , 2 | TiO₂.4SiO₂.6MeSiO_{1,5} |
| | 130,8 | 7,2 | 27,7 | 41,1 | 0 | | |
| VL453 | 14,9 | 1,4 | 8,6 | 3,2 | 0 | 19,6 | TiO₂.7SiO₂.2MeSiO_{1,5} |
| | 146,2 | 7,2 | 50,7 | 21,5 | 0 | | |
| VL454 | 13 , 4 | 1,3 | 9,4 | 0 | 1, 5 | 18 , 2 | TiO₂.8SiO₂.2Me₃SiO_{0,5} |
| | 130,8 | 6,9 | 55,3 | 0 | 13,7 | | |
| VL456 | 12,4 | 1,3 | 6,8 | 2,1 | 1, 5 | 17,2 | TiO₂.6SiO₂.2MeSiO_{1,5}.2Me₃SiO_{0,5} |
| | 121,1 | 7,0 | 39,9 | 13,9 | 14,1 | | |

### Exemple 2

Cet exemple a été réalisé avec :
- Ti(OⁱPr)₄ et Si(OⁱPr)₄ comme agents donneurs d'oxygène et comme précurseur de Si et de Ti
- SiCl₄ comme précurseur de Si
- Me₃SiCl comme précurseurs du groupe organique et de Si.

La préparation a été mise en oeuvre de la même manière que dans l'exemple 1. Deux échantillons ont été préparés avec différentes proportions de précurseurs, qui sont indiquées dans le tableau 2. Dans le cas de VL365, le mélange a été laissé à 110°C pendant 6 jours. Dans le cas de VL366, le mélange a été laissé à 150°C pendant 6 jours. Les solides ont été lavés et séchés comme dans l'exemple précédent.

**Tableau 2**

| Echant. | Ti(OⁱPr)₄ | SiCl₄ | Si(OⁱPr)₄ | MeSiCl₃ | Me₃SiCl | CH₂Cl₂ | Composition |
|---|---|---|---|---|---|---|---|
| VL365 | 1,1 | 4,6 | 7,6 | 0 | 3,2 | 15,9 | TiO₂.15SiO₂.7,5Me₃SiO_{0,5} |
| | 3,8 | 26,9 | 28,9 | 0 | 29,2 | | |
| VL366 | 0,39 | 4,4 | 8,3 | 0 | 3,2 | 15,9 | TiO₂.47SiO₂.23,5Me₃SiO_{0,5} |
| | 1,37 | 25,9 | 31,2 | 0 | 29,2 | | |

### Exemple 3

Les échantillons préparés dans les exemples 1 et 2 ont été caractérisés par analyse élémentaire, par RMN du ²⁹Si, par adsorption/désorption d'azote, par microanalyse par sonde électronique, par diffraction des rayons X et par spectroscopie IR. La composition des matériaux, notamment le rapport Si/Ti, est confirmée par l'analyse élémentaire. La présence des groupements organiques R (méthyle) est montrée par l'analyse élémentaire, la RMN du ²⁹Si et par la spectroscopie IR. Le caractère amorphe des matériaux est montré par diffraction des RX. La microanalyse par sonde électronique montre la bonne homogénéité des matériaux, qui est confirmée par la spectroscopie IR qui indique la présence de liaisons Si-O-Ti. La présence de MCl et de MOⁱPr est démontrée par l'analyse élémentaire, la RMN du ¹³C et par la spectroscopie IR.

Les échantillons obtenus présentent des isothermes de type IV typiques de solides mésoporeux, des surfaces spécifiques S_{BET} très élevées et des diamètres moyens de pore Dp (calculés à partir du volume poreux total Vₚ par la formule D_{P} = 4V_{P}/S_{BET}) supérieurs à 2 nm montrant la présence majoritaire de mésopores. Les résultats sont donnés dans le tableau 3 suivant.

**Tableau 3**

| | S_{BET} (m²/g) | D_{P} (nm) |
|---|---|---|
| VL452 | 1060 | 4,8 |
| VL453 | 1020 | 4,1 |
| VL454 | 930 | 3,4 |
| VL456 | 700 | 2,9 |
| VL365 | 470 | 2,7 |
| VL366 | 480 | 2,9 |

### Exemple 4

Les oxydes mixtes réf. VL452, VL454 et VL365 préparés selon l'exemple 1 et 2 ont été utilisés pour l'époxydation du cyclohexène par l'hydroperoxyde de cumyle à 65 °C dans le toluène. Les essais ont été réalisés dans les conditions suivantes : on introduit 50 mg du matériau à tester dans un ballon sous atmosphère inerte, puis on ajoute 5 ml de toluène sec, 150 mg de nonane (étalon interne) et 2,1 g (25 mmol) de cyclohexène. Après chauffage à 65°C, on injecte 1 g (5 mmol) d'hydroperoxyde de cumyle (à 80%). La réaction est stoppée après 155 minutes et les produits sont analysés par chromatographie en phase vapeur. Dans tous les cas le rendement est supérieur à 80% du rendement théorique, et la sélectivité en oxyde de cyclohexène est supérieure à 95%. Ces résultats montrent que les catalyseurs sont sélectifs et actifs.

## Revendications

1. Oxyde mixte de Ti et de Si à structure mésoporeuse portant des groupes organiques, représenté par la formule (TiO₂) (SiO₂)ₓ(RᵤSiO_{2-(u/2)})_{y} dans laquelle 2<x<100, 0<u<4, x+y>3, 0,1<y<100, et R est un groupe organique choisi parmi les groupes alkyle et les groupes aryle, ou bien R est un groupe divalent arylène ou alkylène reliant deux atomes de Si, **caractérisé en ce que :**
- il porte à sa surface des atomes d'halogène X et des groupes alcoxyde OR' fixés respectivement par une liaison M-X et M-OR', M représentant Si ou Ti, et R' représentant un groupe organique choisi parmi les alkyles et les aryles ;
- il a un volume poreux Vₚ entre 0,2 et 3 cm³/g, et une surface spécifique S_{BET} entre 100 et 1500 m²/g ;
- il est homogène à l'échelle micronique et contient des liaisons Si-O-Ti.

2. Oxyde mixte selon la revendication 1, **caractérisé en ce que** x+y > 8.

3. Oxyde mixte selon la revendication 1, **caractérisé en ce que** X est le chlore.

4. Oxyde mixte selon la revendication 1, **caractérisé en ce que** R représente un alkyle ou un alkylène linéaire ou ramifié.

5. Oxyde mixte selon la revendication 1, **caractérisé en ce que** R est un groupe alkyle ayant de 1 à 18 atomes de carbone.

6. Oxyde mixte selon la revendication 1, **caractérisé en ce que** R est un radical aromatique monocyclique ou polycyclique, condensé ou non.

7. Oxyde mixte selon la revendication 1, **caractérisé en ce que** le groupe organique R porte des groupes fonctionnels, choisis parmi les halogénures, les esters et les amines.

8. Oxyde mixte selon la revendication 1, **caractérisé en ce que** R' est un radical alkyle ayant de 1 à 4 atomes de carbone.

9. Oxyde mixte selon la revendication 1, **caractérisée en ce que** les groupes R' sont identiques ou différents.

10. Oxyde mixte selon la revendication 1, **caractérisé en ce que** (RᵤSiO_{2-(u/2)})_{y} représente plusieurs types d'unités (Rⁱ_{uⁱ}SiO_{2- (uⁱ/2)})_{yⁱ} dans lesquelles :
- les différents Rⁱ représentent indépendamment les uns des autres un groupe alkyle ou un groupe aryle, ou un groupe divalent arylène ou alkylène reliant deux atomes de Si ;
- les uⁱ, identiques ou différents, sont tels que 0<uⁱ<4 ;
- les yⁱ, identiques ou différents, sont tels que la somme des yⁱ satisfait aux conditions énoncées pour y.

11. Procédé de préparation d'un oxyde mixte selon la revendication 1, **caractérisé en ce qu'**il consiste à faire réagir au moins un halogénure choisi parmi TiX₄, SiX₄ et RₜSiX₄₋ₜ avec au moins un agent donneur d'oxygène choisi parmi les dialkyléthers R'-OR', les tétraalcoxydes de titane Ti(R'O)₄, les tétraalcoxydes de silicium Si(R'O)₄, les organoalcoxysilanes RₛSi(OR')₄₋ₛ et les alcools R'OH selon le schéma réactionnel global suivant :
aTiX₄ +cSiX₄ + fRₜSiX₄₋ₜ + bTi(R'O)₄ + dSi(R'O)₄ + eRₛSi(OR')₄₋ₛ + g(R'OH ou R'-OR')
dans lequel a, b, c, d, e, f et g représentent le nombre de moles des réactifs respectifs, avec les conditions suivantes : a+b>0, c+d>0, e+f>0, 0<t<4, 0<s<4.

12. Procédé selon la revendication 11, **caractérisé en ce que** l'agent donneur d'oxygène est autre qu'un éther ou un alcool, et **en ce que** le nombre n_{X} d'atomes d'halogène et le nombre n_{R'} de groupes R' apportés par les précurseurs sont tels que 0,9 ≤ n_{X}/n_{R'} ≤ 1,1, c'est-à-dire 0,9 ≤ 4a +4c + f(4-t) / 4b + 4d + e(4-s) + 2g ≤ 1,1.

13. Procédé selon la revendication 11, **caractérisé en ce que** le seul agent donneur est un éther R'OR', et **en ce que** le nombre n_{X} d'atomes d'halogène et le nombre n_{R'} de groupes R' apportés par l'éther sont tels que 0,9 ≤ n_{X/}n_{R'}, c'est-à-dire 0,9 ≤ 4a +4c + f(4-t) / 2g.

14. Procédé selon la revendication 11, **caractérisé en ce que** l'alcool R'OH est le seul agent donneur d'oxygène, et **en ce que** le nombre n_{X} d'atomes d'halogène et le nombre n_{R'} de groupes R' apportés par l'alcool sont tels que 1,8 ≤ nₓ/n_{R'}, c'est-à-dire 1,8 ≤ 4a +4c + f(4-t) / 2g.

15. Procédé selon la revendication 11, dans lequel l'agent donneur d'oxygène est autre qu'un alcool, **caractérisé en ce que** la réaction est effectuée à une température supérieure à 80°C.

16. Procédé selon la revendication 11, **caractérisé en ce que** l'halogénure d'organosilane RₜSiX₄₋ₜ est un mélange d'halogénures d'organosilane R^{j}ₛjSi(OR')₄₋ₛj dans lesquels les Rⁱ sont choisis indépendamment les uns des autres parmi les radicaux définis pour R, et les tⁱ identiques ou différents sont tels que 0<tⁱ<4, et **en ce que** les proportions fⁱ des divers halogénures d'organosilane sont choisies de telle sorte que la somme des divers fⁱ(4-tⁱ) satisfait aux conditions énoncées pour f(4-t).

17. Procédé selon la revendication 11, **caractérisé en ce que** l'organoalcoxysilane RₛSi(OR')₄₋ₛ est un mélange de composés R^{j}ₛjSi(OR')₄₋ₛj dans lesquels les R^{j} sont choisis indépendamment les uns des autres parmi les radicaux définis pour R, et les s^{j} identiques ou différents sont tels que 0<s^{j}<4, et **en ce que** les proportions eⁱ des divers organoalcoxysilanes sont choisies de telle sorte que la somme des divers e^{j}(4-s^{j}) satisfait aux conditions énoncées pour e(4-s).

18. Procédé selon la revendication 11, **caractérisé en ce qu'**on ajoute aux réactifs un catalyseur choisi parmi les acide de Lewis.

19. Procédé selon la revendication 11, **caractérisé en ce que** l'oxyde mixte obtenu est séparé du milieu réactionnel par filtration, lavage et séchage.

20. Procédé d'époxydation d'une oléfine par un hydroperoxyde, **caractérisé en ce qu'**on utilise comme catalyseur un oxyde mixte selon la revendication 1.

## Claims

1. Mixed Ti/Si oxide with a mesoporous structure carrying organic groups, represented by the formula (TiO₂) (SiO₂) ₓ (RᵤSiO_{2-(u/2)})_{y} wherein 2<x<100, 0<u<4, x+y>3, 0.1<y<100, and R is an organic group selected from among the alkyl and aryl groups, or R is a divalent arylene or alkylene group linking two Si atoms,
**characterised in that :**
- it carries on its surface halogen atoms X and alkoxide groups OR' which are fixed respectively by a bond M-X and a bond M-OR', where M represents Si or Ti, and R' represents an organic group selected from among the alkyls and aryls;
- it has a pore volume Vₚ of between 0.2 and 3 cm³/g, and a specific surface area S_{BET} of between 100 and 1500 m²/g;
- it is homogeneous at the micron scale and contains Si-O-Ti bonds.

2. Mixed oxide according to claim 1, **characterised in that** x+y > 8.

3. Mixed oxide according to claim 1, **characterised in that** X is chlorine.

4. Mixed oxide according to claim 1, **characterised in that** R denotes a straight-chain or branched alkyl or alkylene.

5. Mixed oxide according to claim 1, **characterised in that** R is an alkyl group having 1 to 18 carbon atoms.

6. Mixed oxide according to claim 1, **characterised in that** R is a monocyclic or polycyclic aromatic radical which may or may not be condensed.

7. Mixed oxide according to claim 1, **characterised in that** the organic group R carries functional groups selected from among the halides, the esters and the amines.

8. Mixed oxide according to claim 1, **characterised in that** R' is an alkyl radical having 1 to 4 carbon atoms.

9. Mixed oxide according to claim 1, **characterised in that** the groups R' are identical or different.

10. Mixed oxide according to claim 1, **characterised in that** (RᵤSiO_{2-(u/2)})_{y} denotes several types of (RⁱᵢⁱSiO_{2-(uⁱ/2})_{y}ⁱ units wherein:
- the different groups Rⁱ independently of one another denote an alkyl group or an aryl group, or a divalent arylene or alkylene group linking two Si atoms;
- the uⁱ, which may be identical or different, are such that 0<uⁱ<4;
- the yⁱ, which may be identical or different, are such that the sum of the groups yⁱ satisfies the conditions given for y.

11. Process for preparing a mixed oxide according to claim 1, **characterised in that** it consists in reacting at least one halide selected from among TiX₄, SiX₄ and RₜSiX₄₋ₜ with at least one oxygen donor agent selected from among the dialkylethers R'-OR', the titanium tetraalkoxides Ti(R'O)₄, the silicon tetraalkoxides Si(R'O)₄, the organoalkoxysilanes RₛSi(OR')₄₋ₛ and the alcohols R'OH according to the following overall reaction scheme:
aTiX₄ + cSiX₄ + fRₜSiX₄₋ₜ + bTi(R'O)₄ + dSi(R'O)₄ + eRₛSi(OR')₄₋ₛ+ g(R'OH or R'-OR')
wherein a, b, c, d, e, f and g denote the number of moles of the respective reagents, with the following conditions: a+b>0, c+d>0, e+f>0, 0<t<4, 0<s<4.

12. Process according to claim 11, **characterised in that in that** the oxygen donor agent is other than an ether or an alcohol, and **in that** the number n_{X} of halogen atoms and the number n_{R}' of groups R' supplied by the precursors are such that 0.9 ≤ nₓ/n_{R}' ≤ 1.1, that is to say 0.9 ≤ 4a + 4c + f(4-t) / 4b + 4d + e(4-s) + 2g ≤ 1.1.

13. Process according to claim 11, **characterised in that** the only donor agent is an ether R'OR', and **in that** the number n_{X} of halogen atoms and the number n_{R}' of groups R' supplied by the ether are such that 0.9 ≤ nₓ/n_{R'}, in other words 0.9 ≤ 4a + 4c + f(4-t) / 2g.

14. Process according to claim 11, **characterised in that** the alcohol R'OH is the only oxygen donor agent, and **in that** the number n_{X} of halogen atoms and the number n_{R'} of groups R' supplied by the alcohol are such that 1.8 ≤ nₓ/n_{R'}, that is 1.8 ≤ 4a + 4c + f(4-t) / 2g.

15. Process according to claim 11, wherein the oxygen donor agent is other than an alcohol, **characterised in that** the reaction is carried out at a temperature above 80°C.

16. Process according to claim 11, **characterised in that** the organosilane halide RₜSiX₄₋ₜ is a mixture of organosilane halides RⁱₜⁱSiX₄₋ₜⁱ wherein the Rⁱ groups are selected independently of one another from among the radicals defined for R, and the tⁱ groups which may be identical or different are such that 0<tⁱ<4, and **in that** the proportions fⁱ of the various organosilane halides are selected such that the sum of the various fⁱ(4-tⁱ) satisfies the conditions stated for f(4-t).

17. Process according to claim 11, **characterised in that** the organoalkoxysilane RₛSi(OR')₄₋ₛ is a mixture of compounds R^{j}ₛ^{j}Si(OR')₄₋ₛ^{j} wherein the R^{j} groups are selected independently of one another from among the radicals defined for R, and the s^{j} group which may be identical or different are such that 0< s^{j} <4, and **in that** the proportions eⁱ of the various organoalkoxysilanes are selected such that the sum of the various e^{j}(4-s^{j}) satisfies the conditions stated for e(4-s).

18. Process according to claim 11, **characterised in that** a catalyst selected from among the Lewis acids is added to the reagents.

19. Process according to claim 11, **characterised in that** the mixed oxide obtained is separated from the reaction medium by filtration, washing and drying.

20. Process for epoxidising an olefin by means of a hydroperoxide, **characterised in that** a mixed oxide according to claim 1 is used as catalyst.

## Patentansprüche

1. Ti/Si-Mischoxid mit mesoporöser Struktur welches organische Gruppen der Formel (TiO₂)(SiO₂)ₓ(RᵤSiO_{2-(u/2)})_{y} aufweist, in der 2<x<100, 0<u<4, x+y>3, 0,1<y<100 bedeuten und R eine organische Gruppe darstellt, ausgewählt aus Alkylgruppen und Arylgruppen, oder R eine zweiwertige Arylen- oder Alkylen-Gruppe darstellt, welche zwei Si-Atome verbindet, **dadurch gekennzeichnet, dass** es:
- auf seiner Oberfläche Halogenatome X und Alkoxid-Gruppen OR' trägt, die durch eine M-X- bzw. M-OR'-Bindung gebunden sind, worin M Si oder Ti bedeutet und R' eine organische Gruppe darstellt, ausgewählt aus Alkyl und Aryl;
- ein Porenvolumen Vₚ zwischen 0,2 und 3 cm³/g und eine spezifische Oberfläche S_{BET} zwischen 100 und 1500 m²/g aufweist;
- im Mikronmaßstab homogen ist und Si-O-Ti-Bindungen aufweist.

2. Mischoxid nach Anspruch 1, **dadurch gekennzeichnet, dass** x+y > 8 ist.

3. Mischoxid nach Anspruch 1, **dadurch gekennzeichnet, dass** X Chlor bedeutet.

4. Mischoxid nach Anspruch 1, **dadurch gekennzeichnet, dass** R geradkettiges oder verzweigtes Alkyl oder Alkylen bedeutet.

5. Mischoxid nach Anspruch 1, **dadurch gekennzeichnet, dass** R eine Alkylgruppe mit 1 bis 18 Kohlenstoffatomen ist.

6. Mischoxid nach Anspruch 1, **dadurch gekennzeichnet, dass** R ein monocyclischer oder polycyclischer, kondensierter oder nichtkondensierter aromatischer Rest ist.

7. Mischoxid nach Anspruch 1, **dadurch gekennzeichnet, dass** die organische Gruppe R funktionelle Gruppen ausgewählt aus Halogeniden, Estern und Aminen trägt.

8. Mischoxid nach Anspruch 1, **dadurch gekennzeichnet, dass** R' eine Alkylgruppe mit 1 bis 4 Kohlenstoffatomen ist.

9. Mischoxid nach Anspruch 1, **dadurch gekennzeichnet, dass** die Gruppen R' identisch oder verschieden sind.

10. Mischoxid nach Anspruch 1, **dadurch gekennzeichnet, dass** (RᵤSiO_{2-(u/2)})_{y} für mehrere Arten von Einheiten (Rⁱ_{uⁱ}SiO_{2-(uⁱ/2})_{yⁱ} steht, worin:
- die verschiedenen Gruppen Rⁱ unabhängig voneinander eine Alkyl- oder eine Aryl-Gruppe oder eine zweiwertige Arylen- oder Alkylen-Gruppe, die zwei Si-Atome verbindet, bedeuten;
- die Gruppen uⁱ, die identisch oder verschieden sind, die Bedingung 0<uⁱ<4 erfüllen;
- die Gruppen yⁱ, die identisch oder verschieden sind, derart sind, dass die Summe der Gruppen yⁱ die für y angegebenen Bedingungen erfüllt.

11. Verfahren zur Herstellung eines Mischoxids nach Anspruch 1, **dadurch gekennzeichnet, dass** es darin besteht, dass man mindestens ein Halogenid ausgewählt aus TiX₄, SiX₄ und RₜSiX₄₋ₜ mit mindestens einem Sauerstoffdonor, ausgewählt aus den Dialkylethern R'-OR', den Titantetraalkoxiden Ti(R'O)₄, den Siliciumtetraalkoxiden Si(R'O)₄, den Organoalkoxysilanen RₛSi(OR')₄₋ₛ und den Alkoholen R'OH, gemäß dem folgenden globalen Reaktionsschema umsetzt:
aTiX₄ + cSiX₄ + fRₜSiX₄₋ₜ + bTi(R'O)₄ + dSi(R'O)₄ + eRₛSi(OR')₄₋ₛ + g(R'OH oder R'-OR')
worin a, b, c, d, e, f und g die jeweiligen Molzahlen der Reagenzien bedeuten, welche die folgenden Bedingungen erfüllen: a+b>0, c+d>0, e+f>0, 0<t<4, 0<s<4.

12. Verfahren nach Anspruch 11, **dadurch gekennzeichnet, dass** der Sauerstoffdonor von einem Ether oder einem Alkohol verschieden ist und dass die Zahl nx der Halogenatome und die Zahl n_{R'} der durch die Vorläufer zugeführten Gruppen R' solche Werte besitzen, dass 0,9 ≤ n_{X}/n_{R'} ≤ 1,1, das heißt 0,9 ≤ 4a + 4c + f(4-t)/4b + 4d + e(4-s) + 2g ≤ 1,1 erfüllt ist.

13. Verfahren nach Anspruch 11, **dadurch gekennzeichnet, dass** der einzige Sauerstoffdonor ein Ether R'OR' ist und das die Zahl n_{X} der Halogenatome und die Zahl n_{R'} der durch den Ether zugeführten Gruppen R' derart sind, dass 0,9 ≤ n_{X/}n_{R'}, das heißt 0,9 ≤ 4a + 4c + f(4-t) / 2g erfüllt ist.

14. Verfahren nach Anspruch 11, **dadurch gekennzeichnet, dass** der Alkohol R'OH der einzige Sauerstoffdonor ist und dass die Zahl n_{X} der Halogenatome und die Zahl n_{R'} der durch den Alkohol zugeführten Gruppen R' derart sind, dass 1,8 ≤ n_{X}/n_{R'}, das heißt 1,8 ≤ 4a + 4c + f(4-t)/2g erfüllt ist.

15. Verfahren nach Anspruch 11, worin der Sauerstoffdonor von einem Alkohol verschieden ist, **dadurch gekennzeichnet, dass** die Reaktion bei einer Temperatur von mehr als 80°C durchgeführt wird.

16. Verfahren nach Anspruch 11, **dadurch gekennzeichnet, dass** das Organosilanhalogenid RₜSiX₄₋ₜ eine Mischung ist aus Organosilanhalogeniden RⁱₜiSiX₄₋ₜᵢ, worin die Rⁱ unabhängig voneinander ausgewählt sind aus für R definierten Resten und die tⁱ, die identisch oder verschieden sind, derart sind, dass 0<tⁱ<4 gilt, und dass die Verhältnisse fⁱ der verschiedenen Organosilanhalogenide derart ausgewählt sind, dass die Summe der verschiedenen fⁱ(4-tⁱ) die für f(4-t) angegebenen Bedingungen erfüllt.

17. Verfahren nach Anspruch 11, **dadurch gekennzeichnet, dass** das Organoalkoxysilan RₛSi(OR')₄₋ₛ eine Mischung ist aus Verbindungen R^{j}ₛ^{j}Si(OR')₄₋ₛ^{j}, worin die R^{j} unabhängig voneinander ausgewählt sind aus für R definierten Resten und die s^{j}, die identisch oder verschieden sind, derart sind, dass 0<s^{j}<4 gilt, und dass die Verhältnisse eⁱ der verschiedenen Organoalkoxysilane derart ausgewählt sind, dass die Summe der verschiedenen e^{j}(4-s^{j}) die für e(4-s) angegebenen Bedingungen erfüllt.

18. Verfahren nach Anspruch 11, **dadurch gekennzeichnet, dass** man den Reagenzien einen Katalysator ausgewählt aus Lewis-Säuren zusetzt.

19. Verfahren nach Anspruch 11, **dadurch gekennzeichnet, dass** das erhaltene Mischoxid durch Filtration, Waschen und Trocknen aus dem Reaktionsmedium abgetrennt wird.

20. Verfahren zur Epoxydation eines Olefins mit einem Hydroperoxid, **dadurch gekennzeichnet, dass** man als Katalysator ein Mischoxid nach Anspruch 1 verwendet.
